(19) Europäisches Patentamt
European Patent Office
Office européen des brevets

(11) Veröffentlichungsnummer: **0 283 871 B1**

(12) **EUROPÄISCHE PATENTSCHRIFT**

(45) Veröffentlichungstag der Patentschrift: **21.04.93**

(51) Int. Cl.5: **C08L 77/00**, C08L 33/00, C08L 25/00

(21) Anmeldenummer: **88103838.4**

(22) Anmeldetag: **11.03.88**

(54) **Thermoplastische Formmassen aus Polyamiden und Harzcopolymeren.**

(30) Priorität: **24.03.87 DE 3709599**

(43) Veröffentlichungstag der Anmeldung:
**28.09.88 Patentblatt 88/39**

(45) Bekanntmachung des Hinweises auf die Patenterteilung:
**21.04.93 Patentblatt 93/16**

(84) Benannte Vertragsstaaten:
**BE DE ES FR GB IT NL**

(56) Entgegenhaltungen:
**EP-A- 0 030 716**
**DE-A- 3 339 000**
**US-A- 3 496 985**

(73) Patentinhaber: **BAYER AG**

**W-5090 Leverkusen 1 Bayerwerk(DE)**

(72) Erfinder: **Westeppe, Uwe, Dr.**
**Yorkstrasse 19**
**W-5630 Remscheid 11(DE)**
Erfinder: **Struss, Klaus, Dr.**
**Wolfskaul 6**
**W-5000 Köln 80(DE)**
Erfinder: **Lindner, Christian, Dr.**
**Riehler Strasse 200**
**W-5000 Köln 60(DE)**
Erfinder: **Idel, Karsten-Josef, Dr.**
**Am Schwarzkamp 38**
**W-4150 Krefeld(DE)**
Erfinder: **Laue, Hans-Joachim, Dr.**
**Buschstrasse 169**
**W-4150 Krefeld(DE)**

**EP 0 283 871 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue thermoplastische Formmassen aus teilkristallinen oder amorphen Polyamiden A) und thermoplastischen Harzcopolymeren B), die wenigstens einen copolymerisierten (Meth)-acrylsäureester eines tertiären Alkohols enthalten, sowie gegebenenfalls zusätzlich ein Kautschukpolymerisat C) in Mengen bis 35 Gew.-% enthalten können.

Polyamide werden aufgrund ihrer guten Abrieb- und Chemikalienbeständigkeit sowie hoher Zähigkeit, die sich durch Kautschukmodifizierung noch erheblich steigern läßt, als Werkstoff für Formteile mit hohen Anforderungen genutzt. Nachteilig sind die Wasseraufnahme und damit einhergehende Steifigkeitsverluste.

Thermoplastische Harzpolymere aus den Monomeren (substituierte) Styrol(e), Acrylnitril und/oder Acrylsäureester zeigen bei guter Verarbeitbarkeit eine gute Dimensionsstabilität. Die Wärmeformbeständigkeit und Chemikalienresistenz sind dagegen verbesserungswürdig.

Aus der DE-AS 3 120 803 sind Formmassen aus Polyamiden, Pfropfmischpolymerisaten und Olefincopolymeren, die einen (hohen) Anteil an sauren Gruppen aufweisen, bekannt. Die Schlagzähigkeit wird verbessert.

EP-A 0 049 103 beschreibt Polymere aus einem Polyamid und Vinylcopolymerisaten, die Ester und ein Imid einer $\alpha,\omega$-ungesättigten Dicarbonsäure-enthalten und u.a. hohe Dimensionsstabilität und Chemikalien-, Hitze- und Abriebsbeständigkeit aufweisen.

Aus der US-A 4 496 690 sind Mischungen aus Polyamid, Propfpolymerisaten und einem Terpolymerisat aus Styrol, Acrylnitril und einem ungesättigten Carbonsäureamid bekannt, die verbesserte Mischbarkeit, Wärmeformbeständigkeit und Kerbschlagzähigkeit aufweisen.

Die DE-A 2 403 889 lehrt, daß Mischungen aus amorphen Polyamiden und schlagzähmodifizierten Styrolcopolymerisaten mit Acrylsäurederivaten gute mechanische Eigenschaften aufweisen. Bevorzugte Acrylsäurederivate sind Acrylnitril sowie Ester primärer und sekundärer Alkohole.

Aus der DE-AS 1 669 702 sind PA-Formmassen mit 1 bis 40 Gew.-% Copolymerisaten aus Olefinen und (Meth-)acrylsäureestern eines tertiären Alkohols bekannt, die eine verbesserte Schlagzähigkeit aufweisen. Das Zähigkeitsniveau ist jedoch unzureichend.

Die DE-A 2 941 025 lehrt, daß sich die Zähigkeit von Polyamiden insbesondere durch Mischung mit Pfropfkautschuken auf Basis Polybutadien, die eine Hülle aus Acrylsäureestern primärer und sekundärer Alkohole und zusätzlich (Meth)-acrylsäure-t-butylester enthalten, erheblich verbessern läßt.

Überraschenderweise wurde nun gefunden, daß sich gut verträgliche Formmassen aus einem Polyamid A) und einem thermoplastischen Harzcopolymer B) herstellen lassen, wenn das Harzcopolymer B) wenigstens einen (Meth)acrylsäureester eines tertiären Alkohols enthält. Diese Formmassen zeichnen sich u.a. durch gute Zähigkeit und Steifigkeit bei verringerter Wasseraufnahme aus. Insbesondere weisen die Formmassen, welche die Komponente B2) (tertiär Alkylester) enthalten, wesentlich glattere Oberflächen auf als solche mit Harzmassen-Zusätzen ohne die Komponente B2). Es ergeben sich besonders positive Effekte sowohl in Formmassen mit überwiegend Polyamid A), als auch (andere) Effekte in Formmassen mit überwiegend Harzcopolymer B).

Bei überwiegendem Polyamidanteil beobachtet man in den Formmassen insbesondere eine erhöhte Dimensionsstabilität sowie eine verringerte Wasseraufnahme und Schwindung.

Bei überwiegendem Gehalt an Harzcopolymer (B) wird insbesondere die Chemikalien- und Wärmeformbeständigkeit der Formmassen verbessert. Die erfindungsgemäßen Formmassen zeichnen sich im Vergleich zu Abmischungen aus Polyamiden und Harzcopolymeren des Typs B) ohne (Meth-)acrylsäureester eines tertiären Alkohols durch excellente Oberflächen aus.

Ein weiterer Gegenstand der Erfindung sind tieftemperaturzähe Polyamidformmassen aus Polyamiden A), thermoplastischen Harzcopolymerharzen B) und Kautschukpolymerisaten C), vorzugsweise Pfropfkautschuken.

Gegenstand der Erfindung sind somit thermoplastische Formmassen, enthaltend

A) ein thermoplastisches Polyamid,

B) ein thermoplastisches Harzcopolymer, bestehend aus

B1) wenigstens einem Monomeren aus der Reihe der Styrole, $\alpha$-Methylstyrole, Acrylnitril, Methacrylnitril, $C_1$-$C_4$-Carbonsäurevinylester, Ester der Acryl- oder Methacrylsäure mit primären oder sekundären $C_1$-$C_{10}$-Alkoholen

und

B2) wenigstens einem Ester der Acryl- oder Methacrylsäure mit tertiären $C_4$-$C_{10}$-Alkoholen in Mengen bis zu 35 Gew.-% im Harzcopolymer B)

und

C) gegebenenfalls einem, die Schlagzähigkeit der Formmassen erhöhenden Kautschukpolymerisat.

Diese Formmassen können daneben übliche Zusätze wie Stabilisatoren, Pigmente, Farbstoffe etc. in üblichen Mengen enthalten.

Bevorzugt bestehen die Formmassen aus 5 bis 95 Gew.-% Polyamid A) und 95 bis 5 Gew.-% Harzcopolymer B), sowie gegebenenfalls zusätzlich aus dem Kautschukpolymerisat C) in Mengen bis zu 35 Gew.-% C), bezogen auf die Mischung aus A) + B) + C).

Diese bevorzugten Formmassen enthalten somit mindestens 5 Gew.-% eines Polyamids A), bis zu 95 Gew.-% eines Harzcopolymers B) und 0 bis 35 Gew.-% eines Kautschukpolymerisats C).

Als Polyamid-Komponente A) der erfindungsgemäßen Formmassen eignen sich alle teilkristallinen Polyamide, insbesondere Polyamid-6, Polyamid-6,6 und teilkristalline Copolyamide auf Basis dieser beiden Komponenten. Weiterhin kommen teilkristalline Polyamide in Betracht, deren Säurekomponente insbesondere ganz oder teilweise (neben Adipinsäure bzw. Caprolactam) aus Terephthalsäure und/oder Isophthalsäure und/oder Korksäure und/oder Sebacinsäure und/oder Azelainsäure und/oder Adipinsäure und/oder einer Cyclohexandicarbonsäure besteht, und deren Diaminkomponente ganz oder teilweise insbesondere aus m- und/oder p-Xylylendiamin und/oder Hexamethylendiamin und/oder 2,2,4- und/oder 2,4,4-Trimethylhexamethylendiamin und/oder Isophorondiamin bestehen und deren Zusammensetzungen aus dem Stand der Technik bekannt sind.

Außerdem sind teilkristalline Polyamide zu nennen, die ganz oder teilweise aus Lactamen wie 6 bis 12 C-Atomen, gegebenenfalls unter Mitverwendung einer oder mehrerer der obengenannten Ausgangskomponenten, hergestellt werden.

Besonders bevorzugte teilkristalline Polyamide A) sind Polyamid-6 und Polyamid-6,6 oder Copolyamide mit nur geringen Anteilen (bis etwa 10 Gew.-%) der Cokomponenten.

Es können auch als Polyamidkomponente A) amorphe Polyamide eingesetzt werden. Sie werden erhalten durch Polykondensation von Diaminen, beispielsweise Ethylendiamin, Hexamethylendiamin, Decamethylendiamin, 2,2,4-und/oder 2,4,4-Trimethylhexamethylendiamin, m- und/oder p-Xylylendiamin, Bis-(4-aminocyclohexyl)-methan oder Gemischen aus 4,4′-, 2,4′- und/oder 2,2′-Diamino-dicyclohexylmethanen, 2,2-Bis-(4-aminocyclohexyl)-propan, 3,3′-Dimethyl-4,4′-diamino-dicyclohexylmethan, 3-Aminomethyl-3,5,5-trimethyl-cyclohexylamin, 2,5-und/oder 2,6-Bis(aminomethyl)-norbornan und/oder 1,4-Diamino-methylcyclohexan, mit Dicarbonsäuren, beispielsweise Oxalsäure, Adipinsäure, Azelainsäure, Decandicarbonsäure, Heptadecandicarbonsäure, 2,2,4-und/oder 2,4,4-Trimethyladipinsäure, Isophthalsäure oder geringen Mengen an Terephthalsäure. Selbstverständlich sind auch amorphe Copolymere, die durch Polykondensation mehrerer Monomerer erhalten werden, geeignet, ferner solche Copolymere, die unter Zusatz von Aminocarbonsäuren wie $\epsilon$-Aminocapronsäure, $\omega$-Aminoundecansäure oder $\omega$-Aminolaurinsäure oder ihren Lactamen, hergestellt werden.

Besonders geeignete amorphe Polyamide sind die Polyamide, hergestellt aus Isophthalsäure, Hexamethylendiamin und weiteren Diaminen wie 4,4′-Diaminodicyclohexylmethan, Isophorondiamin, 2,2,4-und/oder 2,4,4-Trimethylhexamethylendiamin, 2,5-und/oder 2,6-Bis(aminomethyl)-norbornan; oder aus Isophthalsäure, 4,4′-Diamino-dicyclohexylmethan und $\epsilon$-Caprolactam; oder aus Isophthalsäure, 3,3′-Dimethyl-4,4′-diamino-dicyclohexylmethan und Laurinlactam; oder aus Terephthalsäure und dem Isomerengemisch aus 2,2,4-und/oder 2,4,4-Trimethylhexamethylendiamin.

Anstelle des reinen 4,4′-Diaminodicyclohexylmethans können auch Gemische der stellungsisomeren Diaminodicyclohexylmethane eingesetzt werden, die sich zusammensetzen aus
70 bis 99 Mol-% des 4,4′-Diaminoisomeren
1 bis 30 Mol-% des 2,4′-Diaminoisomeren
0 bis 2 Mol-% des 2,2′-Diaminoisomeren und
gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide A) können auch in Form von Gemischen verwendet werden.

Als weitere Komponente enthalten die erfindungsgemäßen thermoplastischen Formmassen wenigstens ein Harzpolymer B), bevorzugt in Mengen von 5 bis 95 Gew.-%, insbesondere 10 bis 85 Gew.-%, ganz besonders bevorzugt 15 bis 80 Gew.-%, bezogen auf die Formmasse aus A) + B).

Das Mischungsverhältnis A) : B) ist in weiten Bereichen frei wählbar und wird im wesentlichen durch die gewünschten Eigenschaften bestimmt. So weisen Mischungen mit >50 % Anteil an Harzcopolymer B) eher die wesentlichen Eigenschaften dieses Polymers auf, einige Eigenschaften sind jedoch verbessert. So ist die Chemikalienbeständigkeit z.B. gegenüber Methanol oder Dekalin (in letzterem sind ausgewählte Harzcopolymere des Typs B) oft nicht beständig) verbessert. Bei Einwirkung von Chemikalien werden die Oberflächen weniger verformt. Desweiteren wird die Spannungsrißbeständigkeit solcher Harze verbessert. Bevorzugte Mischungen mit überwiegendem Harzcopolymeranteil enthalten 5 bis 45 Gew.-%, bevorzugt 10

bis 40 Gew.-%, insbesondere 15 bis 40 Gew.-% an Polyamid A).

Abmischungen mit einem Polyamidanteil >50 % zeigen polyamidtypische Eigenschaften wie z.B. hohe Abriebfestigkeit und Zähigkeit. Die bei Polyamiden unerwünschte Wasseraufnahme wird durch den Zusatz des Harzes B) verringert, auch werden meistens erhöhte E-Module bestimmt. Die Zähigkeit der Mischungen hängt essentiell vom Anteil der Komponente B2) in der Mischung ab. Thermoplastische Formmassen aus A) und B), die die Komponente B2) nicht enthalten, weisen nur unzureichende Zähigkeit auf.

Bevorzugte Mischungen mit überwiegendem Polyamidanteil enthalten 5 bis 45 Gew.-%, bevorzugt 10 bis 40 Gew.-%, insbesondere 15 bis 40 Gew.-% an Harzcopolymer B).

Thermoplastische Harz(co)polymere B) im Sinne der Erfindung sind Interpolymere aus

B1) wenigstens einem Monomeren aus der Reihe der Styrole, der α-Methylstyrole, Acrylnitril, Methacrylnitril, der -$C_1$-$C_4$-Carbonsäure Vinylester, Ester der Acryl-oder Methacrylsäure mit primären oder sekundären $C_1$-$C_{10}$-Alkoholen und

B2) wenigstens einem Ester der Acryl- oder Methacrylsäure mit tertiären $C_4$-$C_{10}$-Alkoholen, in Mengen bis zu 35 Gew.-% B2) im Harzpolymer B).

Bevorzugte Monomere B1) als Monomerbausteine der Harzpolymeren B) sind Styrol, α-Methylstyrol, Acrylnitril, Methylmethacrylat, n-Butylmethacrylat, Cyclohexylmethacrylat und Vinylacetat, besonders bevorzugt sind α-Methylstyrol, Acrylnitril und Methylmethacrylat.

Die Styrole und α-Methylstyrole können dabei am aromatischen Ring, z.B. durch $C_1$-$C_3$-Alkyl-, halogenhaltige ($C_1$-$C_3$)-Alkyl- und/oder Halogengruppen substituiert sein, bevorzugt sind jedoch Styrol und α-Methylstyrol, insbesondere α-Methylstyrol.

Monomere B2) im Sinne der Erfindung sind tertiäre (Meth)Acrylsäureester und besitzen die allgemeine Formel

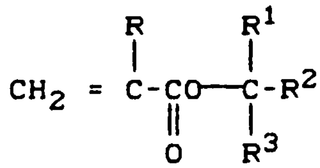

mit R = H, $CH_3$ und

$R^1$, $R^2$, $R^3$ = Alkyl, so daß die Summe der C-Atome in $R^1$, $R^2$ und $R^3$ 3 bis 9 beträgt.

Besonders bevorzugte Monomere B2) sind tert.-Butylacrylat, tert.-Butylmethacrylat, tert.-Pentylmethacrylat und tert.-Hexylacrylat, sowie gegebenenfalls tert.-Octyl(meth)acrylate.

Die Harzpolymeren B) stellen Interpolymere aus wenigstens zwei verschiedenen Monomeren dar. Sie können auch als Gemische eingesetzt werden. Besonders im Sinne der Erfindung geeignete Komponenten B) bestehen aus wenigstens zwei verschiedenen Monomeren B1) und wenigstens einem Monomer B2), wie z.B. Terpolymere aus zwei Komponenten B1) wie α-Methylstyrol, Styrol, Methylmethacrylat und Acrylnitril, in Kombination mit tert.-Butyl(meth)-acrylat als Monomerkomponente B2).

Die Harzpolymeren B) enthalten bis zu 35 Gew.-%, bevorzugt bis zu 20 Gew.-%, eingebaute Monomere B2), insbesondere 1 bis 10 Gew.-%, ganz bezonders bevorzugt 1,5 bis 8 Gew.-% an B2).

Besonders vorteilhaft sind Terpolymerisate aus Styrol/Acrylnitril/tert.-Butyl(meth)acrylat, α-Methylstyrol/Acrylnitril/tert.-Butyl(meth)acrylat, insbesondere solche Terpolymerisate aus α-Methylstyrol/Acrylnitril/tert. -Butyl(meth)acrylat, bei denen dieses Terpolymerisat aus 10 bis 80 Gew.-%, bevorzugt 30 bis 75 Gew.-% Styrol und/oder α-Methylstyrol und 10 bis 50 Gew.-%, bevorzugt 20 bis 40 Gew.-%, Acrylnitril, sowie 1 bis 10 Gew.-%, bevorzugt 1,5 bis 8 Gew.-%, tert.-Butyl(meth)acrylat besteht (Gew.-% bezogen auf die Summe der Komponenten B1).

Die Herstellung der Polymeren B) kann nach dem Verfahren der Copolymerisation in Lösung, Masse, Suspension, Dispersion sowie Emulsion durch radikalische oder thermische Polymerisationsverfahren erfolgen. Unter gewissen Umständen ist es vorteilhaft, das Harzpolymer B) in Kombination mit der Komponente C) als Mischung aufzuarbeiten und zu isolieren und diese Mischung dann mit thermoplastischen Polyamiden zu den erfindungsgemäßen Formassen abzumischen.

Besonders im Sinne der Erfindung geeignete Harze B) lassen sich durch wäßrige Emulsionspolymerisation erzeugen. Dabei werden die Monomeren B1) und B2) vorteilhaft unter Mitverwendung anionischer Emulgatoren copolymerisiert. Zu besonders geeigneten Harzen B) gelangt man dann, wenn man mittels anionischer Emulgatoren vom Typ der Carbonsäuresalze polymerisiert, wie z.B. Salzen der Ölsäure, Stearinsäure, Harzsäure, Abietinsäure sowie deren disproportionierten Derivaten. Diese Emulgatoren werden zur Herstellung der Harze in den üblichen Mengen, vorzugsweise in Mengen bis zu 3 Gew.-%, bezogen auf

die Summe der Monomeren B1) und B2), eingesetzt.

Die Polymerisation zu B) erfolgt normalerweise bei mehr als 50 ° C, insbesondere bei 60 bis 100 ° C, sie kann batchweise, diskontinuierlich oder vollkontinuierlich erfolgen.

Die Initiierung der Copolymerisation erfolgt thermisch oder mittels Radikalbildnern wie z.B. Persulfat, Perphosphat, Hydroperoxid, Azoverbindungen sowie gegebenenfalls auch durch sogenannte Redoxinitiierung; bevorzugt sind anorganische, wasserlösliche Initiatoren geeignet.

Das Molekulargewicht der Polymeren B) kann durch verschiedenste Maßnahmen variiert werden, wie z.B. Temperatur Monomerkonzentration, Startermenge oder durch Einsatz sogenannter Regler, wie z.B. von Organoschwefel-Verbindungen wie Mercaptane und Disulfide, wobei langkettige Mercaptane, z.B. n- und tert.-Dodecylmercaptan vorteilhaft sind. Die Regler werden normalerweise im Monomergemisch gelöst und die Mischung danach polymerisiert.

Besonders vorteilhafte erfindungsgemäße Formmassen werden dann erhalten, wenn B) bestimmte Molekulargewichte aufweist, d.h. die Grenzviskositäten [$\eta$], gemessen in dl/g bei Raumtemperatur in DMF, vorzugsweise im Bereich von 0,2 bis 2, insbesondere aber im Bereich von 0,35 bis 1,1, liegt.

Gegebenenfalls als weitere Komponente können die erfindungsgemäßen Formmassen als Komponente C) ein die Schlagzähigkeit der Formmassen erhöhendes Kautschukpolymerisat enthalten. Eine Mitverwendung der Komponente C) ist insbesondere dann vorteilhaft, wenn die Formmassen eine gute Tieftemperaturzähigkeit aufweisen sollen. Bevorzugte Formmassen enthalten bis zu 35, z.B. 1 bis 35, insbesondere 10 bis 30 Gew.-% der Komponente C), bezogen auf die Summe A) + B) + C). Die Komponente C) stellt ein Kautschukpolymerisat dar und enthält oder ist ein Kautschukpolymerisat mit Einfriertemperaturen (Glastemperaturen) kleiner 0 ° C, insbesondere kleiner -20 ° C. Es kann aus der Reihe der Homo-, Co-oder Pfropfpolymerisate auf der Basis von Dienmonomer-, Olefin- oder Acrylatkautschuken ausgewählt werden, die unvernetzt, insbesondere teilvernetzt oder hochvernetzt sein können. Die Komponente C) ist aus den an sich bekannten Kautschukpolymerisaten auszuwählen, die zur Verbesserung der Eigenschaften, insbesondere zur Schlagzähverbesserung von thermoplastischen Polyamiden üblicherweise verwendet werden.

Typische Vertreter dieser Klasse sind z.B: Olefinkautschuke, beispielsweise Dienkautschuke sowie auch Ethylen-Propylen-Copolymerisate, die gegebenenfalls noch geringe Mengen unkonjugierter Dienmonomere eingebaut enthalten können (sogenannte EPDM-Kautschuke), sowie vor allem Dienmonomer/Acrylnitril/Copolymerkautschuke, Dienpolymer/Vinylarylpolymer-Blockpolymere wie Styrol/Butadien-Blockcopolymere.

Weiterhin geeignete Komponenten C) können Olefinkautschuke mit sauren Gruppen sein. Vorteilhafter kann besonders jedoch der Einsatz von Carboxylgruppen enthaltenden Terpolymerisaten aus Ethylen, (Meth)acrylsäure sowie Butylacrylat sein.

Erfindungsgemäß als Komponente C) geeignet können auch kautschukartige Copolymerisate aus Ethylen-Vinylacetat-und Ethylen-(Meth)acrylsäurealkylester-Copolymeren sein. Geeignet als Komponente C) sind auch die in der GB-PS 1 284 489 beschriebenen Ethylencopolymeren mit Aminoacrylatmonomeren. Weiterhin lassen sich auch Interpolymere aus Olefinen, Acrylaten und säurefunktionellen oder latent säurefunktionellen Monomeren wie z.B. (Meth)acrylsäure oder Maleinsäureanhydrid verwenden.

Besonders geeignete Komponenten C) im Sinne der Erfindung sind kautschukartige Pfropfpolymerisate, beispielsweise Pfropfpolymerisate aus $\alpha$-Olefin-Polymerisaten und Carbonsäure- und/oder Ester-Pfropfmonomeren, wobei als Pfropfgrundlagen Copolymere oder Homopolymere aus Ethylen, Propylen und Buten(1) geeignet sind. Geeignete Pfropfpolymerisate sind auch die aus den Patentanmeldungen DE-A 2 622 876, EP-B 13 941, DE-A 2 622 973, DE-A 2 401 149 und EP-B 9757 bekannten Poly-$\alpha$-olefinkautschuk-Maleinsäureanhydrid-Addukte, die gemäß DE-A 3 335 706 bekannten Umsetzungsprodukte aus Ethylen-Copolymeren mit Maleinsäureanhydrid und Dialkylestern der Malein- bzw. Fumarsäure, die gemäß FR-PS 1 568 637 mit ungesättigten Säuren gepfropften Polyolefinkautschuke (GB-PS 998 439), sowie die z.B. in der DE-A 2 622 973 beschriebenen Maleinsäure-gepfropften EPDM-Kautschuke.

Vorteilhaft geeignet sind insbesonders Pfropfpolymerisate, die durch Aufpfropfen von Styrolmonomeren und Acrylnitril auf ein Kautschukpolymerisat, dessen Glastemperatur unter 0 ° C, vorzugsweise unter -20 ° C, liegt, entstehen; Kautschukpolymerisate sind dann beispielswiese Polybutadien, Butadien-Acrylester-Copolymere z.B. auf der Basis von Acrylsäurebutyl- und/oder -ethylhexylester, Polyacrylsäurealkylester, insbesondere solche mit 1 bis 8 Kohlenstoffatomen im Alkylrest, Copolymere aus Butadien, Acrylsäurealkylestern und Vinylalkylethern, Copolymere aus Ethylen, Propylen und einer Dienkomponente. Die Herstellung derartiger kautschukmodifizierter Copolymerisate ist bekannt (z.B. aus JA 48 850 oder US-PS 4 217 424.

Als Komponenten C) sind auch die gemäß DE-A 2 906 222 bekannten Pfopfpolymerisate aus Styrol und Acrylnitril auf Polybutadien oder Copolymerisaten aus Butadien und $\alpha,\beta$-ungesättigten Monomeren, wie beispielsweise Styrol, Acrylnitril, niedere Alkylester der Acryl- oder Methacrylsäure, sowie die bekannten bepfropften Acrylatkautschuke geeignet.

Vorteilhaft geeignet sind auch die z.B. in der DE-A 3 200 070 beschiebenen mehrphasigen Polymere aus einem stark vernetzten Dienkautschuk als Kern, mit einer ersten Hülle aus vernetztem Acrylatkautschuk (Kautschuk mit Kern/Mantelstruktur) und einer zweiten Hülle aus einem Polymerisat oder Copolymerisat aus harzbildenden Monomeren aus der Reihe Styrol, Acrylnitril, Methacrylnitril, Methacrylsäureester oder Mischungen daraus.

Geeignet sind auch die in EP-A 0 134 937 beschriebenen gepfropften, partiell vernetzten Dien- und/oder Acrylatkautschuke, sowie die gemäß DE-A 2 758 615 aus einem vernetzten Kautschuk als Pfropfgrundlage hergestellten Pfropfprodukte. Bevorzugt werden dabei Kautschuke auf Basis Polybutadien und/oder Polyisopren, die bis zu 40, vorzugsweise bis 10 Gew.-% Styrol und/oder Acrylnitril und/oder Ester der Acrylsäure als Comonomer enthalten können. Mögliche Pfropfmonomere können sein: Acrylnitril, Methacrylnitril, aliphatische Ester und Amide der Acrylsäure und Methacrylsäure mit bis zu 22 C-Atomen.

Zu besonders hochwertigen erfindungsgemäßen Formmassen führen als Komponente (C) Pfropfpolymerisate mit teilchenförmiger Struktur und partieller Vernetzung. Vorteilhafte Teilchengrößen ($d_{50}$-Werte) liegen im Bereich von 0,05 bis 2 $\mu$m, besonders 0,08 bis 0,6 $\mu$m, insbesondere von 0,15 bis 0,5 $\mu$m. Die zur Herstellung solcher Pfropfpolymerisate eingesetzten Kautschuke sind ebenfall teilchenförmig, wenigstens teilvernetzt und besitzen Gelgehalte (als Maß für den Vernetzungsgrad) von größer 30 Gew.-%, vorzugsweise größer 70 Gew.-%. Die Gelgehalte werden nach M. Hoffmann et al, Polymeranalytik I und II, Georg Thieme Verlag, Stuttgart (1977) bestimmt. Solche Pfropfpolymerisate enthalten Kautschukgehalte im Bereich größer 20 Gew.-%, insbesondere größer 45 Gew.-%, besonders bevorzugt größer 65 Gew.-%, und enthalten Kautschuke aus der Reihe der Dienkautschuke (Butadien, Isopren) sowie deren Copolymeren mit Styrol, Acrylnitril, Alkyl(meth)acrylat, Vinylether, der Alkylacrylatkautschuke ($C_1$-$C_8$-Alkyl-Acrylat) sowie deren Copolymeren mit Dienmonomeren, Styrol, Acrylnitril, Alkylmethacrylat, Vinylester, Vinylether. Alkylacrylatkautschuke enthalten üblicherweise geringe Mengen polyfunktioneller Comonomerer, die eine Vernetzung der Acrylatkautschuke bewirken, beispielsweise Divinylbenzol, Diol-bis-(Meth)acrylatester, Bis-Acrylamide, Acrylamid-Methylolderivate, Trivinylbenzol, Triallylcyanurat, Triallylisocyanurat. Solche Kautschukgrundlagen sind bekannt. Besonders geeignete Acrylat-Kautschukgrundlagen besitzen eine Kern-Mantel-Struktur, insbesondere einen Dienkautschukkern mit einem Kernanteil von 0,5 bis 10, vorzugsweise 2 bis 4 Gew.-%.

Die bevorzugt geeigneten, auf die Kautschukgrundlagen aufgepfropften Monomere sind Alkylmethacrylat, Styrol, Acrylnitril, Alkylacrylat, Acrylamide, Acrylsäure, Methacrylsäure, insbesondere Methylmethacrylat sowie Kombinationen aus Methylmethacrylat und Alkylacrylaten, gegebenenfalls in kleinen 0,2 bis 5 Gew.-% Anteilen ungesättigte Carbonsäuren wie (Meth)acrylsäure enthaltend.

Besonders gut geeignete, bevorzugt eingesetzte Pfropfpolymerisate vom Typ C) enthalten Kautschukgehalte größer 45 Gew.-%, enthalten Kautschuk mit Gelgehalten größer 70 Gew.-%, besitzen Teilchengrößen von 0,15 bis 0,5 $\mu$m, enthalten Polybutadienkautschuk, Polybutylacrylatkautschuk sowie entsprechende Kern/Mantel-Kautschuke (nach DE-A 3 200 070) und besitzen als Pfropfmonomere Methylmethacrylat, insbesondere in Kombination mit Alkylacrylaten, insbesondere Mischungen aus n-Alkylacrylat und tert.-Alkylacrylat. Diese Pfropfpolymerisate lassen sich durchweg durch Emulsionspfropfpolymerisation nach bekannten Methoden herstellen.

Die Polyamide A) sollen vorzugsweise eine relative Viskosität (gemessen an einer 1 gew.-%igen Lösung in m-Kresol bei 25 °C) von 2,0 bis 5,0, vorzugsweise von 2,5 bis 4,0, aufweisen.

Die erfindungsgemäßen Polyamidformmassen können übliche Additive, wie Gleit- und Entformungsmittel, Nukleierungsmittel, Stabilisatoren, Füll- und Verstärkungsstoffe, Flammschutzmittel, Farbstoffe sowie Thermostabilisatoren, Antioxidantien und/oder Lichtschutzmittel enthalten.

Die Herstellung der Formmassen kann durch Vermischen der Komponenten in üblichen Mischaggregaten, wie Walzen, Knetern, Ein- oder Mehrwellenextrudern, erfolgen.

Wenn auch in den meisten Fällen sämtliche Komponenten zweckmäßigerweise in einem Schritt gemischt werden, kann es manchmal auch empfehlenswert sein, zuerst eine oder gar zwei Komponenten wegzulassen und erst zu einem späteren Zeitpunkt zuzumischen. So können die erfindungsgemäßen Formmassen auf den genannten Mischaggregaten hergestellt werden, indem die Komponenten A), B) und gegebenenfalls C) gemeinsam aufgeschmolzen und homogenisiert werden, oder indem das Pfropfpolymerisat C) in die Schmelze des Polyamids A) oder des Gemischs aus A) und B) eingearbeitet wird.

Die Temperatur bei der Herstellung der Mischungen sollte mindestens 10 °C und zweckmäßig höchstens 80 °C oberhalb des Schmelzpunktes, bzw. Erweichungspunktes bei nichtkristallinen Materialien, der Komponente mit der höchsten Schmelz- bzw. Erweichungstemperatur liegen. Entsprechend dem Eigenschaftsbild eignen sich die erfindungsgemäßen Formmassen überall im Spritzguß- und Extrusionssektor dort, wo die beschriebenen Eigenschaften gefordert werden, wie z.B. im Kfz-Bereich für Stoßfänger, Karosserieteile oder als Gehäusematerial für Elektrogeräte.

Beispiele

Verwendete Komponenten:

A. Polyamid

A1. Polyamid 6 mit einer relativen Viskosität (gemessen an einer 1 gew.-%igen Lösung in m-Kresol bei 25 ° C) von 3,5.

A2. Polyamid 6, mit einer relativen Viskosität (gemessen wie A1.) von 3,0.

A3. Polyamid 66 mit einer relativen Viskosität (gemessen wie A1) von 3,0.

A4. Amorphes Polyamid aus Isophthalsäure und Hexamethylendiamin mit einer relativen Viskosität (gemessen wie A1.) von 2,6.

B. Thermoplastische Harzpolymere (Komponente B)

Vergleichsbeispiel B/A

In einem 10 l Rührgefäß wird eine Lösung aus 3.723 Gew.-Teilen Wasser, 83 Gew.-Teilen Na-Salz der disproportionierten Abietinsäure und 43 Gew.-Teile 1n-Natronlauge vorgelegt. Nach Verdrängen der Luft durch Stickstoff und Einstellung der Innentemperatur auf 75 ° C weren 7 Gew.-Teile Kaliumperoxidisulfat und 358 Gew.-Teile Wasser zugesetzt. Anschließend werden 1.610 Gew.-Teile α-Methylstyrol, 723 Gew.-Teile Acrylnitril und 2 Gew.-Teile t-Dodecylmercaptan innerhalb von 6 h bei 75 ° C zudosiert. Direkt nach Abschluß der Zudosierung werden 1,2 Gew.-Teile Kaliumperoxidisulfat gelöst in 46,7 Gew.-Teilen Wasser, zugesetzt und weitere 4 h bei 75 ° C gerührt.

Der erhaltene α-Methylstyrol-Acrylnitrilcopolymer-Latex wird durch Zusatz von 1,2 Gew.-%, bezogen auf Polymerfeststoff, phenolischer Antioxidantien stabilisiert. Danach wird der Latex bei 85 bis 95 ° C mit einer wäßrigen Lösung von $MgSO_4$ (Bittersalz) und Essigsäure bei pH 4 bis 5 koaguliert, filtriert, elektrolytfrei gewaschen und bei 60 ° C getrocknet.

Beispiele B1 bis B8

In einem 10 l Rührgefäß werden die in Tabelle 1 angegebenen Gew.-Teile Wasser, Na-Salz der disproportionierten Abietinsäure und 1 n NaOH vorgelegt. Nach Verdrängen der Luft durch Stickstoff und Erwärmen auf 75 ° C werden die jeweils angegebenen Gew.-Teile α-Methylstyrol, Acrylnitril, t-Butylacrylat bzw. t-Butylmethacrylat, sowie t-Dodecylmercaptan innerhalb von 6 h bei 75 ° C zudosiert. Nach Abschluß der Zudosierung werden sofort 1,2 Gew.-Teile Kaliumperoxidisulfat gelöst in 46,7 Gew.-Teilen Wasser zugesetzt und weitere 4 h bei 75 ° C gerührt.

Die erhaltenen Terpolymer-Latices werden jeweils durch Zusatz von 1,2 Gew.-%, bezogen auf Polymerfeststoff, phenolischer Antioxidantien stabilisiert. Die Latices werden anschließend bei 85 bis 95 ° C mit einer wäßrigen Lösung von $MgSO_4$ (Bittersalz) und Essigsäure bei pH 4 bis 5 koaguliert, filtriert, elektrolytfrei gewaschen und bei 60 ° C getrocknet.

Beispiele B9 bis B10

In einem 10 l Rührkessel werden die in Tabelle 2 angegebenen Gew.-Teile Wasser, Na-Salz der disproportionierten Abietinsäure und 1 n NaOH vorgelegt. Nach Verdrängen der Luft durch Stickstoff und Erwärmen auf 65 ° C werden 10 Gew.-Teile Kaliumperoxidisulfat und 400 Gew.-Teile Wasser zugesetzt.

Anschließend werden die in Tabelle 2 bei den jeweiligen Beispielen angegebenen Gew.-Teile Styrol, Acrylnitril, t-Butylmethacrylat und t-Dodecylmercaptan als Zulauf 1, sowie Wasser, Na-Salz der disproportionierten Abietinsäure 1 n NaOH als separater Zulauf 2 innerhalb von 4 h zur Vorlage zudosiert. Nach Ende der Zudosierung wird weitere 4 h gerührt. Die Stabilisierung und Aufarbeitung erfolgt wie bei den Beispielen B1 bis B8 beschrieben.

Vergleichsbeispiel BB

Das Vergleichsbeispiel BB wurde entsprechend dem bei den Beispielen 9 bis 10 beschriebenen Verfahren hergestellt. Die eingesetzten Gew.-Teile sind in Tabelle 2 angegeben.

<u>Tabelle 1</u> Herstellung der erfindungsgemäß eingesetzten thermoplastischen Harzpolymeren B auf Basis α-Methylstyrol/Acrylnitril/t-Butyl(meth)acrylat

| Beispiele | | Vergleichs-beispiel BA | Beispiele: B1 | B2 | B3 | B4 | B5 | B6 | B7 | B8 |
|---|---|---|---|---|---|---|---|---|---|---|
| <u>Vorlage</u> | | | | | | | | | | |
| Wasser | Gew.-Teile | 3.723 | 3.723 | 3.723 | 3.723 | 3.723 | 3.723 | 3.723 | 3.723 | 3.723 |
| Emulgator* | Gew.-Teile | 83 | 83 | 83 | 83 | 83 | 83 | 83 | 83 | 83 |
| 1 n NaOH | Gew.-Teile | 43 | 43 | 43 | 43 | 43 | 43 | 43 | 43 | 43 |
| Kaliumperoxidisulfat | Gew.-Teile | 7 | 7 | 7 | 7 | 7 | 7 | 7 | 7 | 7 |
| Wasser | Gew.-Teile | 358 | 358 | 358 | 358 | 358 | 358 | 358 | 358 | 358 |
| Zulauf | | | | | | | | | | |
| α-Methylstyrol | Gew.-Teile | 1.610 | 1.575 | 1.540 | 1.540 | 1.493,4 | 1.575 | 1.505 | 1.551,7 | 1.493,4 |
| Acrylnitril | Gew.-Teile | 723 | 723 | 723 | 653 | 606,4 | 723 | 723 | 664,7 | 606,4 |
| t-Butylacrylat | Gew.-Teile | - | 35 | 70 | 140 | 233,3 | - | - | - | - |
| t-Butylmethacrylat | Gew.-Teile | - | - | - | - | - | 35 | 105 | 116,7 | 233,3 |
| t-Dodecylmercaptan | Gew.-Teile | 2 | 2 | 2 | 2 | 2 | 2 | 2 | 2 | 2 |
| Zusatz | | | | | | | | | | |
| Kaliumperoxidisulfat | Gew.-Teile | 1,2 | 1,2 | 1,2 | 1,2 | 1,2 | 1,2 | 1,2 | 1,2 | 1,2 |
| Wasser | Gew.-Teile | 46,7 | 46,7 | 46,7 | 46,7 | 46,7 | 46,7 | 46,7 | 46,7 | 46,7 |
| Gew.-% t B(M)A | | 0 | 1,5 | 3 | 6 | 10 | 1,5 | 4,5 | 5 | 10 |

*Na-Salz der disproportionierten Abietinsäure

**Tabelle 2** Herstellung von erfindungsgemäß eingesetzten Harzpolymeren B) auf Basis Styrol-Acrylnitril-t-Butyl(meth)acrylat

| | | Beispiel B9 | Beispiel B10 | Vergleichsbeispiel BB |
|---|---|---|---|---|
| Vorlage: | | | | |
| Wasser | Gew.-Teile | 1.700 | 1.700 | 1.700 |
| Emulgator* | Gew.-Teile | 14,5 | 14,5 | 14,5 |
| 1 n NaOH | Gew.-Teile | 7,5 | 7,5 | 7,5 |
| Kaliumperoxidisulfat | Gew.-Teile | 10 | 10 | 10 |
| Wasser | Gew.-Teile | 400 | 400 | 400 |
| Zulauf 1: | | | | |
| Styrol | Gew.-Teile | 1.428 | 1.336,5 | 1.428 |
| Acrylnitril | Gew.-Teile | 567 | 486 | 567 |
| t-Butylmethacrylat | Gew.-Teile | 30 | 202,5 | - |
| t-Dodecylmercaptan | Gew.-Teile | 8 | 8 | 8 |
| Zulauf 2: | | | | |
| Wasser | Gew.-Teile | 1.400 | 1.400 | 1.400 |
| Emulgator* | Gew.-Teile | 57,8 | 57,8 | 57,8 |
| 1 n NaOH | Gew.-Teile | 30 | 30 | 30 |

*Na-Salz der disproportionierten Abietinsäure

Beispiele für erfindungsgemäß geeignete Kautschukpolymerisate (Komponente C)

Beispiel C1

Zur Herstellung des Kautschukpolymerisats (C) werden nach dem Verfahren der Emulsionspolymerisation gemäß den Angaben in der DE-A 3 105 364 14,4 Gew.-Teile Styrol und 5,6 Gew.-Teile Acrylnitril auf 80 Gew.-Teile eines grobteiligen Kautschuks mit einem mittleren Teilchendurchmesser der in Latexform vorliegenden Butadienpfropfgrundlage von 0,4 µm und einem Gelgehalt von 86 Gew.-% aufgepfropft (Gelbestimmung nach M. Hoffmann et al, Polymeranalytik I und II, Georg Thieme Verlag, Stuttgart (1977).

Beispiel C2

Zur Herstellung des Kautschukpolymerisats (C) werden nach dem Verfahren der Emulsionspolymerisation gemäß denAngaben in der DE-A 3 105 364 und DE-A 3 019 233 20 Gew.-Teile Methylmethacrylat auf 80 Gew.-Teile eines grobteiligen Kautschuks mit einem mittleren Teilchendurchmesser der in Latexform vorliegenden Butadienpfropfgrundlage von 0,4 µm nach Beispiel C1) aufgepfropft.

Beispiel C3

Zur Herstellung des Kautschukpolymerisats (C) werden nach dem Verfahren der Emulsionspolymerisation 18 Gew.-Teile Methylmethacrylat und 2 Gew.-Teile n-Butylacrylat auf 80 Gew.-Teile eines grobteiligen Kautschuks mit einem mittleren Teilchenduchmesser der in Latexform vorliegenden Butadienpfropfgrundlage nach Beispiel C1) aufgepfropft.

Beispiel C4

Zur Herstellung des Kautschukpolymerisats (C) werden nach dem Verfahren der Emulsionspolymerisation 18 Gew.-Teile Methylmethacrylat und 2 Gew.-Teile t-Butylacrylat auf 80 Gew.-Teile eines grobteiligen Kautschuks mit einem mittleren Teilchendurchmesser der in Latexform vorligenden Butadienpfropfgrundlage nach Beispiel C1 aufgepfropft.

Beispiel C5

Zur Herstellung des Kautschukpolymerisats (C) werden gemäß den Angaben in der EP 0 134 937 nach dem Verfahren der Emulsionspolymerisation 20 Gew.-Teile Methylmethacrylat auf 80 Gew.-Teile eines grobteiligen Kautschuks mit einem mittleren Teilchendurchmesser der in Latexform vorliegenden Acrylatpfropfgrundlage von 0,5 µm aufgepfropft. Anschließend wird der Latex koaguliert und weiteren 14,3 Gew.-Teilen Methylmethacrylat aufgepfropft.

Beispiel C6

Es wurde ein mit 0,70 % Maleinsäureanhydrid gepfropfter EPM-Kautschuk (Vistalon® XX 1301 der Fa. Esso) eingesetzt.

B. Herstellung und Prüfung der Formmassen

Auf einem kontinuierlich arbeitenden Doppelwellenextruder wurde die Polyamidkomponente aufgeschmolzen und zu deren Schmelze das thermoplastische Harzcopolymer B und gegebenenfalls der Kautschuk C zudosiert und in der Schmelze homogenisiert. Die Zylindertemperaturen wurden so gewählt, daß die in den Tabellen angegebenen Massetemperaturen eingehalten wurden. Der Schmelzstrang wurde vor dem Austritt aus der Düse entgast, in Wasser abgeleitet, granuliert und getrocknet.

Von den Formmassen wurden auf einer üblichen Spritzgußmaschine 80 x 10 x 4 mm Prüfstäbe hergestellt. Geprüft wurden der Biege-E-Modul (DIN 53457), Wärmeformbeständigkeit (Vicat B) (DIN 53 460) sowie die Schlagzähigkeit bzw. Kerbschlagzähigkeit nach Izod (ISO 180) bei verschiedenen Temperaturen und daraus der Spröd/Zäh-Übergang ermittelt.

Die Wasseraufnahme wurde nach Lagerung (10 Tage) von 3 Prüfstäben in Wasser von 40 °C gravimetrisch bestimmt.

**Tabelle 3** Zusammensetzung und Eigenschaften der erfindungsgemäßen Formmassen

| Beispiel | Komponenten | | | | Eigenschaften | | | |
|---|---|---|---|---|---|---|---|---|
| | Polyamid[1] | | Thermopl. Harzcopolymer | | Schlag-zähigk., RT | Wasserauf-nahme | Biege-E-Modul | Vicat B °C |
| | Typ | Gew.-% | Typ | Gew.-% | kJ/m² | % | MPA | |
| 1 (Vergleich) | A 1) | 90 | B A) | 10 | 25,6 | 8,5 | 2595 | 183 |
| 2 (Vergleich) | A 1) | 70 | B A) | 30 | 19,5 | 5,7 | 2973 | 143 |
| 3 (Vergleich) | A 1) | 50 | B A) | 50 | 10,7 | 3,8 | 3239 | 122 |
| 4 | A 1) | 90 | B 5) | 10 | 27,3 | 8,5 | 2694 | 184 |
| 5 | A 1) | 70 | B 5) | 30 | 24,8 | 6,2 | 2997 | 153 |
| 6 | A 1) | 50 | B 5) | 50 | 16,1 | 4,2 | 3226 | 122 |
| 7 | A 1) | 70 | B 6) | 30 | 58,5 | 5,8 | 3071 | - |
| 8 | A 1) | 70 | B 7) | 30 | 72,5 | 5,9 | 3085 | - |
| 9 | A 1) | 70 | B 8) | 30 | 95,2 | 5,9 | 3091 | - |
| 10 (Vergleich) | A 1) | 100 | - | - | n.geb. | 9,4 | 2600 | >200° |

1) Die Massetemperatur betrug 260 - 270° C

**Tabelle 4** Zusammensetzung und Eigenschaften der erfindungsgemäßen Formmassen

| Beispiel | Komponenten: Polyamid[1]-A) Typ | Polyamid[1]-A) Gew.-% | Thermoplast. Harzcopolymer B) Typ | Thermoplast. Harzcopolymer B) Gew.-% | Eigenschaften: Schlagzähigkeit $kJ/m^2$ | Wasseraufnahme % | Vicat B °C |
|---|---|---|---|---|---|---|---|
| 11 (Vergleich) | A 3) | 70 | B A) | 30 | 21,8 | 4,5 | 209 |
| 12 (Vergleich) | A 3) | 50 | B B) | 50 | 15,0 | 3,4 | 141 |
| 13 | A 3) | 70 | B 1) | 30 | 33,5 | 4,6 | 193 |
| 14 | A 3) | 70 | B 2) | 30 | 39,5 | 4,6 | 204 |
| 15 | A 3) | 70 | B 3) | 30 | 48,1 | 4,7 | 202 |
| 16 | A 3) | 70 | B 4) | 30 | 75,2 | 4,7 | 201 |
| 17 | A 3) | 50 | B 9) | 50 | 17,1 | 3,3 | 136 |
| 18 | A 3) | 50 | B 10) | 50 | 30,2 | 3,3 | 138 |

1) Die Massetemperatur betrug 275 - 285°C

**Tabelle 5** Zusammensetzung und Eigenschaften der erfindungsgemäßen Formmassen

| Beispiel | Komponenten | | | | | | Eigenschaften | | |
|---|---|---|---|---|---|---|---|---|---|
| | Polyamid[1]-A) | | Thermopl. Harzcopolymer B) | | Kautschuk C) | | Kerbschlagzähigkeit | | |
| | Typ | Gew.-% | Typ | Gew.-% | Typ | Gew.-% | RT | -20 | -30 |
| 19 (Vergleich) | A 1) | 60 | B A) | 15 | C 4) | 25 | 78,6 | 21,5 | - |
| 20 (Vergleich) | A 2) | 50 | B A) | 20 | C 4) | 30 | 21,0 | - | - |
| 21 | A 1) | 60 | B 2) | 15 | C 4) | 25 | 84,4 | 66,8 | 40,5 |
| 22 | A 1) | 60 | B 3) | 15 | C 4) | 25 | 83,3 | 67,1 | 43,0 |
| 23 | A 2) | 50 | B 5) | 20 | C 4) | 30 | 22,4 | - | - |
| 24 | A 2) | 50 | B 6) | 20 | C 4) | 30 | 80,3 | 72,8 | 26,5 |
| 25 | A 2) | 50 | B 7) | 20 | C 4) | 30 | 79,9 | - | 63,5 |
| 26 | A 2) | 50 | B 3) | 20 | C 1) | 30 | 60,7 | 22,0 | - |
| 27 | A 1) | 60 | B 3) | 15 | C 2) | 25 | 84,8 | 26,5 | - |
| 28 | A 1) | 60 | B 2) | 15 | C 3) | 25 | 84,4 | 28,3 | - |
| 29 | A 2) | 50 | B 3) | 20 | C 5) | 30 | 23,0 | - | - |
| 30 | A 1) | 60 | B 2) | 15 | C 6) | 25 | 83,6 | 67,9 | 48,2 |

Tabelle 6: Zusammensetzung und Eigenschaften der erfindungsgemäßen Formmassen

| Beispiel | Komponenten: Polyamid[1] A Typ | Polyamid[1] A Gew.-% | Thermopl. Harzcopolymer B Typ | Thermopl. Harzcopolymer B Gew.-% | Eigenschaften: Schlagzähigkeit RT, KJ/m² | Wasseraufnahme % |
|---|---|---|---|---|---|---|
| 31 (Vergleich) | A 4 | 90 | BA | 10 | 108,0 | 4,58 |
| 32 (Vergleich) | A 4 | 70 | BA | 30 | 66,9 | 4,14 |
| 33 | A 4 | 90 | B1 | 10 | 123,6 | 4,85 |
| 34 | A 4 | 70 | B1 | 30 | 83,4 | 4,17 |

Die Zähigkeit der Formmassen kann durch Zusatz eines Kautschuks C und/oder Verwendung von Harzcopolymer B mit einem höheren Gehalt an B2 weiter verbessert werden.

1) Die Massetemperatur betrug 285-290°C.

## Patentansprüche

**1.** Thermoplastische Formmassen enthaltend

A) ein thermoplastisches Polyamid,

B) ein thermoplastisches Copolymer bestehend aus

B1) wenigstens einem Monomeren aus der Reihe der Styrole, α-Methylstyrole, Acrylnitril, Methacrylnitril, $C_1$-$C_4$-Carbonsäurevinylester, Ester der Acryl- oder Methacrylsäure mit primären oder sekundären $C_1$-$C_{10}$-Alkoholen

und

B2) wenigstens einem Ester der Acryl- oder Methacrylsäure mit tertiären $C_4$-$C_{10}$-Alkoholen in Mengen von 1 Gew-% bis zu 35 Gew.-% im Harzcopolymer B)

und

C) gegebenenfalls ein die Schlagzähigkeit der Formmasse erhöhendes Kautschukpolymerisat.

**2.** Formmassen nach Anspruch 1, enthaltend 5-95 Gew.-% A) und 95 - 5 Gew.-% B), sowie gegebenenfalls bis zu 35 Gew.-% der Komponente C) bezogen auf die Summe von A) + B) + C).

**3.** Formmassen nach Ansprüchen 1 und 2, dadurch gekennzeichnet, daß die Harzpolymeren B) Terpolymere aus Monomeren aus der Reihe Styrol, α-Methylstyrol, Acrylnitril, Methacrylnitril als Monomerkomponente B1) und aus tert.-Butyl(meth)acrylat als Monomerkomponente B2) darstellen.

**4.** Formmassen nach Ansprüchen 1 bis 3, dadurch gekennzeichnet, daß die Harzpolymeren B) aus Mischungen aus zwei Monomeren B1) aus der Reihe Styrol, α-Methylstyrol und Acrylnitril und bis zu 20 Gew.-% tert.-Butyl(meth)acrylat als Monomer B2) bestehen.

**5.** Formmassen nach Ansprüchen 1 und 2, dadurch gekennzeichnet, daß die Komponente C) Homo-, Co- oder Pfropfpolymerisate auf der Basis von Dienmonomerkautschuken, Olefinkautschuken oder Acrylatkautschuken darstellen.

**Claims**

**1.** Thermoplastic moulding compounds containing

A) a thermoplastic polyamide,

B) a thermoplastic copolymer consisting of

B1) at least one monomer from the series of styrenes, α-methyl styrenes, acrylonitrile, methacrylonitrile, $C_{1-4}$ carboxylic acid vinyl esters, esters of acrylic or methacrylic acid with primary or secondary $C_{1-10}$ alcohols

and

B2) at least one ester of acrylic or methacrylic acid with tertiary $C_{4-10}$ alcohols in quantities of 1 to 35% by weight in the resin copolymer B)

and

C) optionally a rubber polymer which increases the impact strength of the moulding compound.

**2.** Moulding compounds as claimed in claim 1 containing 5 to 95% by weight A) and 95 to 5% by weight B) and optionally up to 35% by weight component C), based on the sum of A) + B) + C).

**3.** Moulding compounds as claimed in claims 1 and 2, characterized in that the resin polymers B) are terpolymers of monomers from the series of styrene, α-methyl styrene, acrylonitrile, methacrylonitrile as monomer component B1) and of tert. butyl (meth)acrylate as monomer component B2).

**4.** Moulding compounds as claimed in claims 1 to 3, characterized in that the resin polymers B) consist of mixtures of two monomers B1) from the series of styrene, α-methyl styrene and acrylonitrile and up to 20% by weight tert. butyl (meth)acrylate as monomer B2).

**5.** Moulding compounds as claimed in claims 1 and 2, characterized in that component C) is selected from homoco- or graft polymers based on diene monomer rubber, olefin rubbers or acrylate rubbers.

**Revendications**

**1.** Matières à mouler thermoplastiques contenant

A) un polyamide thermoplastique,

B) un copolymère thermoplastique consistant en

B1) au moins un monomère de la classe des styrènes, des α-méthylstyrènes, de l'acrylonitrile, du méthacrylonitrile, des esters vinyliques d'acides carboxyliques en $C_1$-$C_4$, des esters acryliques ou méthacryliques d'alcools primaires ou secondaires en $C_1$-$C_{10}$ et
B2) au moins un ester de l'acide acrylique ou méthacrylique et d'alcool tertaire en $C_4$-$C_{10}$ en quantité de 1% en poids à 35% en poids dans le copolymère résineux B)

et

C) le cas échéant un polymère du type caoutchouc accroissant la résilience des matières à mouler.

**2.** Matières à mouler selon la revendication 1, contenant 5 à 95% en poids de A) et 95 à 5% en poids de B), et le cas échéant jusqu'à 35% en poids du composant C), par rapport à la somme de A) + B) + C).

**3.** Matières à mouler selon les revendications 1 et 2, caractérisées en ce que les polymères résineux B) sont des copolymères ternaires de monomères de la classe du styrène, de l'α-méthylstyrène, de l'acrylonitrile, du méthacrylonitrile en tant que composants monomères B1) et du (méth)acrylate de tert-butyle en tant que composant monomère B2).

**4.** Matières à mouler selon les revendications 1 à 3, caractérisées en ce que les polymères résineux B) consistent en mélanges de deux monomères B1) de la classe du styrène, de l'α-méthylstyrène et de l'acrylonitrile, avec une proportion allant jusqu'à 20% en poids de (méth)acrylate de tert-butyle en tant que monomère B2).

**5.** Matières à mouler selon les revendications 1 et 2, caractérisées en ce que le composant C) consiste en homopolymères, copolymères ou polymères greffés à base de caoutchoucs de monomères diéniques, de caoutchoucs d'oléfines ou de caoutchoucs d'acrylates.